(19) Europäisches Patentamt
European Patent Office
Office européen des brevets

(11) Publication number: **0 023 957**
**B1**

(12) # EUROPEAN PATENT SPECIFICATION

(45) Date of publication of patent specification: **18.01.84**

(51) Int. Cl.³: **C 08 L 27/16**

(21) Application number: **80103329.1**

(22) Date of filing: **13.06.80**

(54) **Vulcanizable compositions based on elastomeric copolymers of vinylidene fluoride and vulcanized articles obtained from these compositions.**

(30) Priority: **14.06.79 IT 2357279**
**18.03.80 IT 2073180**

(43) Date of publication of application:
**18.02.81 Bulletin 81/7**

(45) Publication of the grant of the patent:
**18.01.84 Bulletin 84/3**

(84) Designated Contracting States:
**BE DE FR GB IT NL**

(56) References cited:
**AT - B - 325 853**
**DE - A - 2 442 173**

(73) Proprietor: **Montedison S.p.A.**
**Patents & Licensing Dept. Foro Buonaparte, 31**
**P.O. Box 10528**
**I-20121 Milan (IT)**

(72) Inventor: **Mauro, Gastone**
**7, Via dei Salici**
**Milan (IT)**
Inventor: **Lagana, Carlo**
**6 Via Anzani**
**Milan (IT)**
Inventor: **Geri, Sergio**
**7 Piazza Insubria**
**Milan (IT)**
Inventor: **Strepparola, Ezio**
**1/A Viale Partigiano**
**Treviglio (Bergamo) (IT)**

(74) Representative: **Weinhold, Peter, Dr. et al,**
**Patentanwälte Dr. V. Schmied-Kowarzik Dipl.-Ing. G. Dannenberg Dr. P. Weinhold Dr. D. Gudel Dipl.-Ing. S. Schubert Siegfriedstr. 8**
**D-8000 München 40 (DE)**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European patent convention).

**EP 0 023 957 B1**

Courier Press, Leamington Spa, England.

# Vulcanizable compositions based on elastomeric copolymers of vinylidene fluoride and vulcanized articles obtained from these compositions

In the field of development of the fluorinated elastomers, in later times well defined requirements have experienced a growing strengthening, i.e.:

— a general improvement of the rheological characteristics and the processability (workability) of the mixes;

— obtaining manufactured articles of a low hardness, below 55 IRHD;

— the possibility to easily extrude manufactured articles with a complicated profile and also of considerable size.

Such objects were pursued with the help of process-assisting agents of the plasticizing type or with various lubricants. The product used so far for this purpose, such as polyesters, polyethylene, pentaerythritol tetrastearate, wax and the like, etc., did not prove to be suited because they cause an appreciable decay of the typical characteristics of the fluorinated elastomers.

In fact, in order to impart to the elastomers in question the well known properties of heat resistance and resistance to fluids, it is indispensable to have a "heat stabilization" (post-vulcanization) at temperatures comprised between 200°C and 250°C, over a period of about 24 hours.

During this operation, the standard plasticizing agents (e.g.: glycols, stearates, organic phosphates, oleates, phtalates, etc.) volatilize and/or decompose. This causes a considerable decay of the mechanical properties of the manufactured end products, in particular it brings about:

— an excessive increase of hardness;

— a decay of the resistance to the permanent set under compression ("compression set");

— a decay of the elasticity characteristics (low value of the elongation and high value of the elasticity coefficient);

— poor thermal resistance which hinders its use under severe application conditions (>180°C).

Summing up, it may be said that the benefits achievable in the processing stage, lead to unacceptable disadvantages in the finished products.

Thus, the use of plasticizers and lubricants is limited to small quantities (1—3 parts by weight) that do not appreciably alter the final properties of the vulcanized products, but which, on the other hand, are insufficient to satisfy the mentioned requirements.

In particular, it has been noticed that the use of perfluorosilicon oils allows to reduce the hardness of a product by 4—5 points, that is, down to the lowest limit of 50 IRDH*, although it shows difficulties in admixing and incorporating into the fluoro-elastomers.

Moreover, there occurs a drop in vulcanization rate and a worsening of the compression set value and the resistance to heat.

The use of very low molecular weight fluorinated polymers, having the consistency of waxes, such as: Viton® LM, produced by DuPont, was adopted in order to impart to the molecules better rheological characteristics, particularly during extrusion. It is thus possible to obtain extruded articles of great dimensions and with a complicated profile. However, the use of such a "plasticizer", in a ratio of 10 to 20 parts by weight for 100 parts of fluoro-elastomer, brings about the following disadvantages:

— it is possible only with polyamine-based conventional vulcanizing systems, while it is not compatible with more recent vulcanizing systems based on bisphenols and accelerators, incorporated in the fluoro-elastomers.

— it is the cause of the slowing down of the vulcanization, which compels one to increase the dwell time in the press.

It has now been found that the above listed drawbacks, derived from the use of the so far known process-assisting agents for the fluoroelastomer (hereinafter, "fluoroelastomer" means a copolymer of vinylidene fluoride with fluorinated vinyl ethers or with fluorinated or chlorofluorinated olefines) mixes, may be avoided by using polyamides derived from perfluoro-polyethers. Such polyamides, derived from bi-functional amines, both aliphatic as well as aromatic, have a structure formed by repeating or recurring units, represented by the formula:

$$—COCF_2O(CF_2O)_n—(CF_2CF_2O)_m—CF_2—CO—NR—A—NR—$$

wherein $CF_2O$ and $CF_2CF_2O$ are oxiperfluoro-alkylene units which were found to be present contemporaneously and distributed statistically along the chains; wherein the index $n$ and $m$ are integers comprised between 2 and 100. while the sum $n + m$ is a number comprised between 5 and 200, but preferably between 15 and 100, while the m-/n ratio is comprised between 0.2 and 1.5, but preferably is comprised between 0.3 and 1.2, wherein $A$ is a bivalent organic radical chosen from amongst:

a) alkylenes containing from 2 to 20 carbon atoms, but preferably from 6 to 12, possibly with alkyl substituents having from 1 to 6 carbon atoms in the main chain;

* The IRDH-values have been determined according to ASTMD 1415

b) cycloalkylenes containing from 5 to 10 carbon atoms, possibly with alkyl substituents having from 1 to 6 carbon atoms;

c) heterocyclic radicals with a ring of 5 or 6 atoms;

d) arylene or alkylarylene radicals with one or more benzene rings, possibly linked to each other by O, S atoms or by: —CO—, —SO—, —NH—, $—SO_2—$, alkenyl groups having from 1 to 3 carbon atoms and wherein R is selected from hydrogen or an alkyl or phenyl group.

The above indicated polyamides obtained from derivatives of perfluorinated ethers, are amply described in Italian Patent No. 956.237 filed in the name of the same Applicant. In this patent there is also described the preparation of the polyamides in question by means of the polycondensation of bi-functional amines with polyoxyperfluoroalkandioic acids of the formula:

$$HOOC—CF_2O(CF_2CF_2O)_m—(CF_2O)_n—CF_2COOH$$

in admixture with a certain quantity of the corresponding monocarboxylic acids containing, that is, an inactive terminal group of the type: $—OCF_3$, $—OCF_2Cl$.

The mixture has a degree of functionality comprising between 1.4 and 1.99.

The above described fluorinated polyamides are used as process-assisting agents for fluorinated elastomers, in a quantity of from 5 to 15 parts by weight for 100 parts of elastomer.

The fluorinated polyamides best suited for the use under consideration are those having an inherent viscosity comprised between 0.1 and 0.6

$$\left[\frac{dl}{g}\right]$$

determined on a 0.3% polyamide solution in a solvent mixture of dimethylformamide and 1,1,2-trichlorotrifluoro-ethane (in a volumetric ratio of 1:9) at 20°C, with a Desreux-Bishoff type free-fall viscosimeter. This inherent viscosity is defined by the relationship:

$$\eta_{inher.} = \frac{1}{C} \ln \frac{t}{t_o}$$

wherein $C$ is the concentration of the solute expressed in g/dl, $t$ and $t_o$ are the defluxion times of equal volumes of solvent and solution in the capillary of the viscosimeter.

In general, there are needed greater quantities of fluorinated polyamide in the mix, whenever there are used polyamides of high viscosity.

The above mentioned polyamides show a high mixability and compatibility with fluorinated elastomers and they do not alter the latter's thermal and chemical resistance characteristics. Moreover, they allow to obtain mixes of a high degree of extrudability and the manufacture of formed or extruded articles with a low hardness value (about 43 IRDH).

Moreover, they are perfectly compatible with the vulcanizing systems presently in use, inclusive of those of a nucleophile nature of the bisphenol type.

The fluorinated polyamides in question are particularly useful as additives in vulcanizable elastomeric compositions based on copolymers of the vinylidene fluoride with other fluorinated or chlorofluorinated olefines or with perfluorinated vinyl ethers. Examples of fluorinated and chloro-fluorinated olefins are: tetrafluoroethylene, hexafluoropropene, trifluorochloroethylene.

Moreover, it has been found that particularly advantageous results with regard to the mechanical properties at very low temperatures of the vulcanizers, are obtained by using together perfluoropolyamide and a mixture consisting of perfluoropolyethers of an oily consistency and of polytetra-fluoroethylene in powder form.

The mixture of perfluoropolyether and polytetrafluoroethylene, having the consistency of a fatty lubricant, is obtained by thoroughly mixing together a polytetrafluoroethylene of a mean granulometric size comprised between 0.1 and 4 $\mu$m, but preferably between 0.2 and 2 $\mu$m, in quantities equal to 15—40 parts by weight, but preferably 20—35 parts by weight for 100 parts b.w. of the mixture, with a perfluoropolyether showing the following structure:

$$X—O—(CF_2—\underset{\displaystyle CF_3}{\underset{|}{CF}}—O)_n—(CF_2O)_m—Y$$

wherein:

$n$ is an integer comprised between 30 and 100

$m$ is an integer comprised between 1 and 5

n/m is comprised between 20 and 40

X and Y, equal to or different from each other, are perfluoroalkyl radicals chosen from amongst those containing from 1 to 3 carbon atoms,

and having the consistency of liquid with a viscosity comprised between $1 \times 10^{-3}$ and $1 \times 10^{-2} m^2/s$ (1.000 and 10.000 cSt), corresponding to a mean molecular weight of between 5.000 and 15.000.

Products of this type are those to be found on the market under the name of "Fomblin®" Series Y, produced by Montedison. Other suitable products are those of the following structure:

$$X—O—(CF_2CF_2O)_p—(CF_2O)_q—Y$$

wherein: X and Y are perfluoroalkyl radicals containing from 1 to 2 carbon atoms;
p is comprised between 60 and 1600;
q is comprised between 100 and 2700 and
p/q is comprised between 0.3 and 1.2

having a viscosity comprised between $5 \times 10^{-4}$ and $3 \times 10^{-2} m^2/s$ (500 and 30.000 cSt) and a mean molecular weight of between 20.000 and 270.000. Products of this type are those to be found on the market with the name of "Fomblin® Series Z" by Montedison.

The perfluoropolyethers to be used according to this invention must be free of volatile compounds and have a very low vapour pressure corresponding to a value of less than $133 \times 10^{-13}$ Pa ($10^{-13}$ Torr) at 20°C.

Perfluoropolyethers of the above described type, suited for a use according to this invention, are described in British Patent Nos. 1.522.748 and Luxemburg Patent 81460 granted on October 30, 1979.

The substance, having a consistency of a lubricating grease, and consisting of the polytetrafluoroethylene/perfluoropolyether mixture described above, is additioned with an elastomer in quantities corresponding to 2—7 parts by weight per 100 parts b.w. of elastomer.

The additives according to the invention, and having the function of assisting the processing, allow to obtain mixes of a high extrudability as well as the manufacture of molded or extruded manufactured articles displaying a low hardness value (up to about 45 IRHD).

Moreover, they are perfectly compatible with the vulcanizing systems presently in use, inclusive of those of a nucleophile nature of the bisphenol type.

The mechanical characteristics of the vulcanized materials thus obtained are improved considerably at low temperatures in comparision with the fluoroelastomers with the usual additives.

The embrittlement temperature, determined according to the Brittle Point Test — ASTM D 746, may reach values of up to —40°C. They may thus be used in application fields in which silicon and fluorosilicon elastomers are requested, which, although possessing excellent resistance characteristics at very low temperatures, show, however, in comparsion with fluorinated elastomers, a poor resistance to aggressive chemical agents and solvents, and little resistance to permanent set under compression ("compression set").

In the following will now be given some examples of possible embodiments of this invention, with a purely illustrative and not limiting purpose as far as the protective scope of the invention is concerned.

Example 1

An elastomeric polyamide was synthetized by means of polycondensation of hexamethylendiamine with a mixture of fluorinated polyethers having as chain terminals carboxylic groups in the form of phenyl ester. The perfluorinated starting polyether had a mean molecular weight of about 1950, a molar ratio $C_2F_4O/CF_2O$ equal to about 0.9 and a degree of functionality of about 1.9 (due to a certain content in monofunctional acids with neutral end groups such as: $—OCF_3$, $—OCF_2Cl$).

The reactants were loaded into a reactor, mixed in the cold state, and the mixture was then gradually heated up to reaching 130°—140°C, while simultaneously reducing the pressure until obtaining a vacuum of just a few mmHg (1 mmHg is 133 Pa). The total reaction time amounted to about 10—16 hours.

The polycondensate thus obtained, at room temperature, displayed a gummy consistency and had a low toughness and an inherent viscosity

$$\left[\frac{dl}{g}\right] = 0.27.$$

The inherent viscosity was determined on a solvent mixture of 1,1,2-trichloro-trifluoro-ethane and N,N-dimethylformamide (ratio by volume 4:1), at 20°C. The inherent viscosity is defined by the relationship:

$$\eta_{inher.} = \frac{1}{C} \ln \frac{t}{t_o}$$

wherein: *C* is the concentration in dissolved substance expressed in g/dl; *t* and $t_o$ are downflow times of

equal volumes of solvent and solution in the capillary of the Desreux-Bishoff type free-fall viscosimeter.

The polycondensate as such, at 150°C showed a viscosity of the order of $10^5$ mPa.s($10^5$) (Centipoise).

It was used as an ingredient of vulcanizable fluoroelastomeric mixes.

The compositions of the mixes and the results of the vulcanizations have been recorded on TABLE I as tests Nos. 3 and 6, and on TABLE II as tests Nos. 4, and 6 respectively. For comparative purposes there have been recorded a set of tests with mixes free process-assisting agents (Table I: tests 1 and 4; Table II: tests 3 and 5) and tests with process-assisting agents of the Prior Art (Table I: tests nos. 2 and 5; Table II: tests 1 and 2).

The following ingredients were used in the mixes:

*Tecnofon® NM* (Montedison trade mark):

Elastomeric copolymer pf vinylidene fluoride with hexafluoropropene, in a molar ratio of 4:1, having a Mooney ML viscosity (1+4) at 100°C = 85, and a specific weight (specific gravity) at 25°C = 1.81 g/cm³.

*Viton B* (DuPpont trade mark):

Elastomeric copolymer of vinylidene fluoride/hexafluoropropene/tetrafluoroethylene, in a ratio of 60:20:20, and with a specific weight of 1.86, and a Mooney viscosity = 130.

*Tecnoflon FOR 70* (Montedison trade mark):

Elastomeric copolymer like TECNOFLON NM, containing, moreover, an incorporated vulcanizing-accelerating system.

*Viton E 60—C* DuPont trade mark):

Elastomeric copolymer of vinylidene fluoride with hexafluoropropene, with incorporated a vulcanizing-accelerating system. The Mooney viscosity was = 60; the specific weight is about 1.82.

*Viton LM* (DuPont trade mark):

Elastomeric copolymer of vinylidene fluoride with hexafluoropropene, of low molecular weight. Brookfield viscosity at 100°C was equal to 2.000 mPas (2.000 c.poises); specific weight = 1.72.

Maglite D: magnesium oxide;

*$Ca(OH)_2$—VE*: calcium hydrate (commercial trade mark of Sturge Lts. — 'England).

*Tecnocin A* (Montedison trade mark):

Schiff base from cinnamic aldehyde and hexamethylendiamine.

Example 2

An elastomeric polyamide was synthetized by polycondensation of 2,4-toluenediamine with a mixture of fluorinated polyethers having as chain terminals carboxylic groups in the form of phenyl esters.

The starting perfluorinated polyether had a mean molecular weight of about 2000, a mole ratio S $C_2F_4O/CF_2O$ equal to about 1, and a degree of functionality of 1.97 (due to a certain content in monofunctional acids, that is, with a neutral terminal group).

With the operational procedures described in example 1, there was obtained a polycondensate which, at room temperature, showed a gummy consistency of low toughness. The polycondensate, at 150°C, showed an inherent viscosity of about $10^5$ mPas ($10^5$ cPo). The inherent viscosity, determined at 20°C on the 0.3% solution in a solvent mixture of dimethylformamide and 1,1,2-trichloro-trifluoro-ethane (in a volumeric ratio of 1:9), was

$$\left[\frac{dl}{g}\right] = 0.35.$$

The definition of 'inherent viscosity' and the measuring method have been described in example 1.

The polycondensate was used as an ingredient in vulcanizable fluoroelastomeric mixes. The compositions of the mixes and the results of the vulcanization have been recorded on TABLE III, as tests nos. 3 and 6; on TABLE IV as tests nos. 4, 6 and 7.

For comparative purposes, there have been reported tests with mixes free of process-assisting agents (Table III: tests nos. 1 and 4; Table IV: tests nos. 3 and 5) and tests with process-assisting agents of the Prior Art (Table III: tests 2 and 5; Table IV: tests 1 and 2).

The data about the swelling and the aspect of the extruded products, in the tables, are relevant to extruded articles having cross-section shown in figures 1, 2 and 3 on a scale of 2:1.

Tables follow on following pages:

TABLE I

Fluoroelastomers vulcanized with conventional aminic systems

| MIXES: | | | | | | |
|---|---|---|---|---|---|---|
| Test No. | 1 | 2 | 3 | 4 | 5 | 6 |
| Tecnoflon MN | 100 | 100 | 100 | – | – | – |
| Viton B | – | – | – | 100 | 100 | 100 |
| Tecnoflon FOR 70 | – | – | – | – | – | – |
| Viton E 60 – C | – | – | – | – | – | – |
| Viton LM | – | 10 | – | – | 10 | – |
| Fluoroaliphatic rubber | – | – | 10 | – | – | 10 |
| Fluorosilicon FS 1265 oil | – | – | – | – | – | – |
| Maglite D | 15 | 15 | 15 | 15 | 15 | 15 |
| $Ca(OH)_2$ – VE | – | – | – | – | – | – |
| Carbonblack MT | – | – | – | – | – | – |
| Tecnocin A | 3 | 3 | 3 | 3 | 3 | 3 |
| Vulcanization conditions: Press 170°C × 10 – 20 min. oven at 250°C × 24 hours. | | | | | | |
| Mechanical Properties: | | | | | | |
| Elasticity modulus 100% × $10^1$ kPa | 177 | 196 | 118 | 157 | 108 | 147 |
| Breaking load ,, | 1472 | 1521 | 1373 | 1275 | 1177 | 1079 |
| Elongation, % | 360 | 390 | 375 | 340 | 360 | 350 |
| Shore A hardness | 59 | 50 | 58 | 59 | 57 | 57 |
| IRHD hardness | 53 | 55 | 53 | 53 | 53 | 53 |
| Thermal resistance: | | | | | | |
| 275°C × 70 hours | | | | | | |
| Modulus 100% variation, % | +15 | +20 | +20 | +25 | +21 | +19 |
| Load ,, , % | –9 | –10 | – 8 | –11 | – 9 | – 7 |
| Elongation variation, % | –13 | –15 | –15 | –16 | –18 | –16 |
| Hardness ,, , points | + 5 | + 5 | + 6 | + 5 | + 6 | + 6 |
| Loss of weight: % | – 6 | –55 | – 8 | – 7 | –10 | – 9 |
| Compression set, B % 200°C × 70 hours on O-rings 3,53 mm | 45 | 46 | 52 | 48 | 49 | 49 |

TABLE I (Continued)

| MIXES: TEST No. | | 1 | 2 | 3 | 4 | 5 | 6 |
|---|---|---|---|---|---|---|---|
| Cross-section of Fig. 1 | | | | | | | |
| (1) swelling of the extruded product | % | 18 | 19 | 8 | 7 | 6 | 6 |
| (2) aspect of the extruded product | | 1 | 1 | 3 | 3 | 5 | 5 |
| Cross-section of Fig. 2 | | | | | | | |
| (1) swelling of the extruded product | % | 52 | 50 | 41 | 40 | 25 | 20 |
| (2) aspect of the extruded product | | 2 | 2 | 7 | 6 | 6 | 6 |
| Cross-section of Fig. 3 | | | | | | | |
| (1) swelling of the extruded product | % | 35 | 35 | 25 | 23 | 17 | 16 |
| (2) Aspect of extruded product | | 1 | 1 | 5 | 5 | 6 | 6 |

NOTE:

(1) The swelling of the extruded product is given by the increase in cross-section of the said extruded product with respect to the nozzle, after vulcanization in the autoclave.

(2) There are taken into consideration: the general aspect of the extruded product, the possible formation an orange peel and cracks in correspondence with sharp angles. The indicated number expresses the qualitative value of these characteristics. The test characteristics correspond to value 10.

TABLE II

Fluoroelastomers with incorporated the vulcanizing/accelerating system

| MIX': TEST No. | 1 | 2 | 3 | 4 | 5 | 6 |
|---|---|---|---|---|---|---|
| Tecnoflon NM | – | – | – | – | – | – |
| Viton B | – | – | – | – | – | – |
| Tecnoflon FOR 70 | 100 | – | 100 | 100 | 100 | 100 |
| Viton E 60 | – | 100 | – | – | – | – |
| Viton LM | 10 | 10 | – | – | – | – |
| Fluoro-aliphatic rubber | – | – | – | 10 | – | 10 |
| Maglite D | 5 | 3 | 3 | 3 | 5 | 5 |
| $Ca(OH)_2$ – VE | 5 | 6 | 2 | 2 | 5 | 5 |
| Carbonblack MT | – | – | – | – | 25 | 25 |
| Tecnocin A | – | – | – | – | – | – |
| Vulcanization conditions: Press at 170°C × 10 – 20 min.; oven at 250°C × 24 hours | | | | | | |
| Mechanical Properties: | DOES NOT VULCANIZE | DOES NOT VULCANIZE | | | | |
| Elasticity modulus 100% × $10^1$ kPa | | | 196 | 177 | 589 | 402 |
| Breaking load ,, | | | 1177 | 1128 | 1570 | 1226 |
| Elongation, % | | | 280 | 305 | 205 | 210 |
| Shore A hardness | | | 57 | 50 | 74 | 71 |
| IRHD Hardness | | | 53 | 48 | 71 | 68 |
| Thermal resistance: 275°C × 70 hours | | | | | | |
| Modulus 100% variation, % | | | 0 | +15 | –6 | +17 |
| Load ,, , % | | | –3 | –12 | –16 | + 2 |
| Elongation ,, , % | | | +11 | –19 | +13 | –17 |
| Hardness ,, , points | | | 0 | + 2 | 0 | +5 |
| Loss of weight % | | | –5,5 | –10 | –4 | –9 |
| Compression set, B % 200°C × 70 hours on O-rings 3,53 mm | | | 18 | 21 | 18 | 19 |

TABLE II (Continued)

| MIX: | | | | | | |
|---|---|---|---|---|---|---|
| TEST No. | 1 | 2 | 3 | 4 | 5 | 6 |
| Cross-section of Fig. 1 | DOES NOT VULCANIZE | DOES NOT VULCANIZE | | | | |
| (1) Swelling of extruded product % | | | 13 | 7 | 9 | 6 |
| (2) Aspect of extruded product | | | 1 | 5 | 3 | 5 |
| Cross-section of Fig. 2 | | | | | | |
| (1) Swelling of extruded product % | | | 45 | 25 | 24 | 20 |
| (2) Aspect of extruded product | | | 3 | 6 | 5 | 7 |
| Cross-section of Fig. 3 | | | | | | |
| (1) Swelling of extruded product % | | | 32 | 21 | 16 | 20 |
| (2) Aspect of extruded product | | | 1 | 5 | 4 | 5 |

TABLE III

Fluoroelastomers vulcanized with conventional aminic systems

| MIX: TEST No. | | 1 | 2 | 3 | 4 | 5 | 6 |
|---|---|---|---|---|---|---|---|
| Tecnoflon | NM | 100 | 100 | 100 | – | – | – |
| Viton | B | – | – | – | 100 | 100 | 100 |
| Technoflon FOR 70 | | – | – | – | – | – | – |
| Vitcon E 60 C | | – | – | – | – | – | – |
| Viton | LM | – | 10 | – | – | 10 | – |
| Fluoroaromatic rubber | | – | – | 10 | – | – | 10 |
| Fluorosilicon FS 1265 oil | | – | – | – | – | – | – |
| Maglite | D | 15 | 15 | 15 | 15 | 15 | 15 |
| $Ca(OH)_2$ – VE | | – | – | – | – | – | – |
| Carbonblack | MT | – | – | – | – | – | – |
| Tecnocin | A | 3 | 3 | 3 | 3 | 3 | 3 |
| Vulcanization conditions: Press at 170°C × 10–20 min.; in oven at 250°C × 24 hours | | | | | | | |
| Mechanical Properties: | | | | | | | |
| Elasticity modulus 100% × $10^1$ kPa | | 157 | 186 | 78 | 147 | 98 | 177 |
| Breaking load | ,, | 1521 | 1472 | 1275 | 1275 | 1177 | 981 |
| Elongation, % | | 370 | 390 | 400 | 350 | 350 | 380 |
| Shore A hardness | | 59 | 50 | 56 | 60 | 56 | 56 |
| IRHD hardness | | 54 | 55 | 51 | 55 | 52 | 52 |
| Thermal Resistance: at 275°C × 70 hours: | | | | | | | |
| Modulus 100%, variation, | % | +15 | +20 | +25 | +23 | +20 | +18 |
| Load variation, | % | – 9 | –12 | –11 | – 7 | – 9 | – 7 |
| Elongation ,, | % | –15 | –14 | –16 | –16 | – 8 | –17 |
| Hardness ,, | points | + 6 | + 7 | + 4 | + 5 | + 5 | + 6 |
| Loss of weight | % | – 8 | – 9 | –10 | – 8 | – 7 | – 8 |
| Compression set, B, % at 200°C × 70 hours on O-rings 3,53 mm | | 45 | 48 | 50 | 46 | 47 | 49 |

TABLE III (Continued)

| MIX: | | | | | | |
|---|---|---|---|---|---|---|
| TEST No. | 1 | 2 | 3 | 4 | 5 | 6 |
| Cross-section of Fig. 1 | | | | | | |
| (1) Swelling of extruded product % | 18 | 19 | 8 | 7 | 6 | 6 |
| (2) Aspect of extruded product | 1 | 1 | 3 | 3 | 3 | 5 |
| Cross-section of Fig. 2 | | | | | | |
| (1) Swelling of extruded product % | 52 | 50 | 41 | 40 | 25 | 20 |
| (2) Aspect of extruded product | 2 | 2 | 7 | 6 | 6 | 6 |
| Cross-section of Fig. 3 | | | | | | |
| (1) Swelling of extruded product % | 35 | 35 | 25 | 23 | 17 | 16 |
| (2) Aspect of extruded product | 1 | 1 | 5 | 5 | 6 | 6 |

TABLE IV

Fluoroelastomers with vulcanizing/accelerating system incorporated in it

| MIX: | | | | | | | |
|---|---|---|---|---|---|---|---|
| TEST No. | 1 | 2 | 3 | 4 | 5 | 6 | 7 |
| Tecnoflon MN | – | – | – | – | – | – | – |
| Viton B | – | – | – | – | – | – | – |
| Tecnoflon FOR 70 | 100 | – | 100 | 100 | 100 | 100 | 100 |
| Viton E 60 – C | – | 100 | – | – | – | – | – |
| Viton LM | 10 | 10 | – | – | – | – | – |
| Fuoroaromatic rubber | – | – | – | 10 | – | 10 | 5 |
| Maglite D | 5 | 3 | 3 | 3 | 5 | 5 | 5 |
| $Ca(OH)_2$ – VE | 5 | 6 | 2 | 2 | 5 | 5 | 5 |
| Carbonblack MT | – | – | – | – | 25 | 25 | 25 |
| Tecnocin A | – | – | – | – | – | – | – |
| Vulcanization conditions: Press at 170°C × 10–20 min.; oven at 250°C × 24 hours | | | | | | | |
| Mechanical Properties: | DOES NOT VULCANIZE | DOES NOT VULCANIZE | | | | | |
| Elasticity modulus 100% × $10^1$ kPa | | | 196 | 157 | 569 | 491 | 589 |
| Breaking load ,, | | | 1177 | 1079 | 1472 | 1177 | 1373 |
| Elongation, % | | | 270 | 320 | 200 | 220 | 200 |
| Shore A hardness | | | 57 | 50 | 73 | 71 | 73 |
| IRHD hardness | | | 53 | 47 | 70 | 68 | 70 |
| Thermal resistance: at 275°C × 70 hours | | | | | | | |
| El. modulus 100%, variation, % | | | 0 | +10 | + 8 | + 7 | + 7 |
| Br. load ,, , % | | | –10 | –12 | – 6 | – 8 | –18 |
| Elongation ,, ,, , % | | | –13 | –12 | –15 | –17 | –17 |
| Hardness ,, ,, , points | | | – 0 | + 1 | + 1 | + 3 | + 3 |
| Loss of weight in % | | | – 5 | –10 | – 4 | – 8 | – 6 |
| Compression set, B, % at 200°C × 70 hours on O-rings 3,53 mm | | | 18 | 20 | 19 | 19 | 19 |

TABLE IV (Continued)

| MIX: TEST No. | 1 | 2 | 3 | 4 | 5 | 6 | 7 |
|---|---|---|---|---|---|---|---|
| Cross-section of Fig. 1 | DOES NOT VULCANIZE | DOES NOT VULCANIZE | | | | | |
| (1) Swelling of extruded product % | | | 13 | 7 | 9 | 6 | 7,6 |
| (2) Aspect of extruded product % | | | 1 | 5 | 3 | 5 | 5 |
| Cross-section of Fig. 2 | | | | | | | |
| (1) Swelling of extruded product % | | | 45 | 25 | 24 | 20 | 20 |
| (2) Aspect of extruded product % | | | 3 | 6 | 5 | 7 | 7 |
| Cross-section of Fig. 3 | | | | | | | |
| (1) Swelling of extruded product % | | | 32 | 21 | 20 | 16 | 16 |
| (2) Aspect of extruded product | | | 1 | 5 | 4 | 5 | 5 |

Example 3

The elastomeric perfluoropolyamide described in example 1 was used as an ingredient in vulcanizable fluoroelastomeric mixes, in combination with "Fomblin Grease" consisting of a mixtures of 30 parts b.w. of polytetrafluoroethylene having a granulometric size distribution comprised between 0.2 and 4 $\mu$m, and of 70 parts b.w. of "Fomblin® type Y 114/13' (perfluoropolyether with a viscosity of 1400—1600 c. stokes and structure

$$CF_3O—(CF_2—\underset{\displaystyle CF_3}{\underset{|}{C}F}—O)_n—(CF_2O)_m—CF_3$$

with n/m = 40).

The compositions of the mixes and the results of the vulcanization have been recorded on TABLE V in tests nos. 5 and 8.

For comparison purposes there have been given also tests with mixes free of process-assisting agents (tests 3 and 6) and tests with process-assisting agents of the Prior Art (tests 1 and 2) or with perfluoropolyamide only (tests 4 and 7).

Example 4

The elastomeric perfluoropolyamide described in Example 2, was used as an ingredient in vulcanizable fluoroelastomeric mixes in combination with "Fomblin Grease" of the type used in example 3. The compositions of the mixes and the results of the vulcanization have been recorded on TABLE VI in tests Nos. 3 and 6.

For comparative purposes, there are also reported tests with mixes free of process-assisting agents (tests 1 and 4) and tests with process-assisting agents of the prior Art (tests 2 and 5).

Example 5

There was prepared a vulcanizable mix with a fluoroelastomer with incorporated a vulcanizing system, by using as process-assisting agents the perfluorinated polyamides of example 1, and the 'Fomblin Grease' used in the preceding examples.

The results obtained with this mix have been recorded on TABLE VII under Test 2. For comparative purposes there have also been reported the results with mixes free of process-assisting agents (test 1) and with an elastomer of the Prior Art (Test 3), that is, Silastic® LS 43U, a fluorosiliconic rubber of the Dow Corning Company.

As evidenced by the results reported by the table, the mix according to this invention, with respect to a conventional Tecnoflon® FOR 70, shows a brittleness temperature of about 15°C lower, and practically maintains unaltered both the mechanical as well as the chemical resistance properties. As far as the resistance to chemical agents and solvents is concerned, the corresponding values are by far superior to those of Silastic LS 43U.

TABLE V

Fluoroelastomers with incorporated a vulcanizing-accelerating system

| MIX: TEST No. | 1 | 2 | 3 | 4 | 5 | 6 | 7 | 8 |
|---|---|---|---|---|---|---|---|---|
| Tecnoflon FOR 70 | 100 | – | 100 | 100 | 100 | 100 | 100 | 100 |
| Viton E 60 – C | – | 100 | – | – | – | – | – | – |
| Viton LM | 10 | 10 | – | – | – | – | – | – |
| Fluoroaliphatic rubber | – | – | – | 10 | 10 | – | 10 | 10 |
| Fomblin Grease | – | – | – | – | 5 | – | – | – |
| Maglite | 5 | 3 | 3 | 3 | 3 | 5 | 5 | 5 |
| $Ca(OH)_2$ – VE | 5 | 6 | 2 | 2 | 4 | 5 | 5 | 5 |
| Carbonblack MT | – | – | – | – | – | 25 | 25 | 25 |
| Tecnocin A | – | – | – | – | – | – | – | – |
| Vulcanization conditions: Press 170°C × 10–20 minutes; oven at 250°C × 24 hours | | | | | | | | |
| Mechanical Properties: | DOES NOT VULCANIZE | DOES NOT VULCANIZE | | | | | | |
| Elasticity modulus 100% × $10^1$ kPa | | | 196 | 177 | 118 | 589 | 402 | 294 |
| Breaking load ,, ,, | | | 1177 | 1128 | 1020 | 1570 | 1226 | 1334 |
| Elongation, % | | | 280 | 305 | 312 | 205 | 210 | 249 |
| Shore A hardness | | | 57 | 50 | 46 | 74 | 71 | 67 |
| IRHD Hardness | | | 53 | 48 | 44 | 71 | 68 | 63 |
| Thermal Resistance: 275°C × 70 hours | | | | | | | | |
| Modulus 100% variation, % | | | 0 | +15 | + 3 | – 6 | +17 | + 5 |
| Load ,, , % | | | – 3 | –12 | – 4 | –16 | + 2 | + 5 |
| Elongation ,, , % | | | +11 | –19 | –13 | +13 | –17 | –11 |
| Hardness ,, , % | | | 0 | + 2 | + 3 | 0 | + 5 | + 6 |
| Loss of weight % | | | –5,5 | –10 | –10 | – 4 | – 9 | – 9 |
| Compression set, B, % 200°C × 70 hours on O-rings 3,53 mm | | | 18 | 21 | 20 | 18 | 19 | 20 |

TABLE V (Continued)

| MIX: | | | | | | | | |
|---|---|---|---|---|---|---|---|---|
| TEST No. | 1 | 2 | 3 | 4 | 5 | 6 | 7 | 8 |
| Cross-section of Fig. 1 | DOES NOT VULCANIZE | DOES NOT VULCANIZE | | | | | | |
| (1) Swelling of the extruded product % | | | 13 | 7 | 4 | 9 | 6 | 2 |
| (2) Aspect of the extruded product | | | 1 | 5 | 5 | 3 | 5 | 8 |
| Cross-section of Fig. 2 | | | | | | | | |
| (1) Swelling of the extruded product % | | | 45 | 25 | 25 | 24 | 20 | 10 |
| (2) Aspects of extruded product | | | 3 | 6 | 9 | 5 | 7 | 9 |
| Cross-section of Fig. 3 | | | | | | | | |
| (1) Swelling of extruded product % | | | 32 | 21 | 11 | 16 | 20 | 11 |
| (2) Aspect of extruded product | | | 1 | 5 | 9 | 4 | 5 | 9 |

TABLE VI

Fluoroelastomers vulcanized with traditional aminic systems

| MIX: TEST No. | | 1 | 2 | 3 | 4 | 5 | 6 |
|---|---|---|---|---|---|---|---|
| Tecnoflon | N | 100 | 100 | 100 | – | – | – |
| Viton B | B | – | – | – | 100 | 100 | 100 |
| Viton | LM | – | 10 | – | – | 10 | – |
| Fluoroaromatic rubber | | – | – | 10 | – | – | 10 |
| Fomblin Grease | | – | – | 5 | – | – | 5 |
| Maglite | D | 15 | 15 | 15 | 15 | 15 | 15 |
| Tecnocin | A | 3 | 3 | 3 | 3 | 3 | 3 |
| Vulcanization conditions: Press at 170°C × 10–20 minutes; oven at 250°C × 24 hours | | | | | | | |
| Mechanical Properties: | | | | | | | |
| Elasticity modulus 100% × $10^1$ kPa | | 157 | 186 | 78 | 147 | 98 | 177 |
| Breaking load | ,, | 1521 | 1472 | 1275 | 1275 | 1177 | 981 |
| Elongation, % | | 370 | 390 | 400 | 350 | 350 | 380 |
| Shore A hardness | | 59 | 50 | 51 | 60 | 56 | 56 |
| IRHD hardness | | 54 | 55 | 46 | 55 | 52 | 52 |
| Thermal resistance: | | | | | | | |
| 270°C × 70 hours | | | | | | | |
| Modulus 100% variation, | % | +15 | +20 | +25 | +23 | +20 | +18 |
| Load variation | % | – 9 | –12 | +11 | – 7 | – 9 | – 7 |
| Elongation variation, | % | –15 | –14 | –16 | –16 | – 8 | –17 |
| Hardness variation, | points | + 6 | + 7 | + 4 | + 5 | + 5 | + 6 |
| Loss of weight | % | – 8 | – 9 | –10 | – 8 | – 7 | – 8 |
| Compression set, B, 270°C × 70 hours on O-rings of 3.35 mm | % | 45 | 48 | 50 | 46 | 47 | 49 |

TABLE VI (Continued)

| MIX: | | | | | | |
|---|---|---|---|---|---|---|
| TEST No. | 1 | 2 | 3 | 4 | 5 | 6 |
| Cross-section of Fig. 1 | | | | | | |
| (1) Swelling of the extruded product % | 18 | 16 | 8 | 17 | 9 | 6 |
| (2) Aspect of extruded product | 1 | 2 | 8 | 1 | 4 | 8 |
| Cross-section of Fig. 2 | | | | | | |
| (1) Swelling of the extruded product % | 52 | 50 | 21 | 40 | 25 | 20 |
| (2) Aspect of extruded product | 2 | 2 | 8 | 6 | 6 | 8 |
| Cross-section of Fig. 3 | | | | | | |
| (1) Swelling of extruded product % | 35 | 35 | 15 | 33 | 19 | 16 |
| (2) Aspect of extruded product | 1 | 1 | 9 | 1 | 6 | 9 |

TABLE VII

| TEST No. | 1 | 2 | 3 |
|---|---|---|---|
| Silastic LS 43 U | – | – | 100 |
| Tecnoflon FOR – 70 | 100 | 100 | – |
| Maglite DE | 5 | 1.5 | – |
| Calcium hydroxide | 5 | 1.5 | – |
| Polyamide | – | 10 | – |
| Fomblin Grease | – | 5 | – |
| Luperco × 4100 1) | – | – | 2 |
| Vulcanization: 170°C × 10 min., press at 220°C × 24 hrs in oven | | | |
| Mechanical Properties at 24°C | | | |
| Elasticity modulus 100%, × $10^1$ kPa | 245 | 147 | 98 |
| Breaking load ,, | 1177 | 981 | 736 |
| Elongation, % | 315 | 410 | 450 |
| Shore A hardness | 55 | 43 | 42 |
| Compression set, B, % | | | |
| On O-rings, 3.53 mm thick | | | |
| 150°C × 7 days | 21 | 22 | 55 |
| 200°C × 3 days | 24 | 25 | 75 |
| Brittle Point ASTM D 746: in °C | –21 | –36 | –58 |
| Chemical Resistance: | | | |
| – in $H_2SO_4$ 96% 24°C × 7 days | | | |
| Variation in volume, % | +1.8 | +2.1 | dissolved |
| – in ASTM No. 3 (2) 200°C × 3 days | | | |
| Variation in volume, % | +4.7 | +5.0 | 18 |
| – in Stauffer Blend 7700 (3) 200°C × 3 days | | | |
| Variation in volume, % | +22 | +23.2 | dissolved |

TABLE VII (Continued)

| TEST No. | 1 | 2 | 3 |
|---|---|---|---|
| Chemical Resistance: | | | |
| – in Perchloroethylene: | | | |
| 24°C × 7 days | | | |
| Variation in volume, % | +1.2 | +1.6 | 12 |
| – in Fuel C (4): | | | |
| 24°C × 7 days | | | |
| Variation in volume, % | +5.5 | +6.3 | 24 |
| – in Super Petrol: | | | |
| 24°C × 7 days | | | |
| Variation in volume, % | +2.3 | +3.1 | 15 |

1) Commercial trade mark of Pennwalt (organic peroxide).

2) Lubricating oil.

3) Lubricating oil of the diester type.

4) 50% toluene + 50% isooctane.

**Claims**

1. Vulcanizable composition based on elastomeric copolymers of vinylidene fluoride with fluorinated or chloro-fluorinated olefines or with fluorinated vinyl ethers (hereinafter fluoroelastomers), comprising as process-assisting agents for the processing of the mix, from 5 to 15 parts by weight per 100 parts b.w. of fluoroelastomer, of a fluorinated polyamide having a structure formed by recurring units represented by the formula:

$$—COCF_2O(CF_2O)_n—(CF_2CF_2O)_m—CF_2CO—NR—A—NR—$$

wherein: the $CF_2O$ and $CF_2CF_2O$ units are distributed statistically along the chain; and where *n* and *m* are integers from 2 to 100, while the sum n + m is comprised between 5 and 200, the m/n ratio lies between 0.2 and 1.5, while A is a bivalent radical chosen from amongst

a) alkylenes containing from 2 to 20 carbon atoms, but preferably from 6 to 12, possibly with alkyl substituents having from 1 to 6 carbon atoms in the main chain;

b) cycloalkylenes containing from 5 to 10 carbon atoms, possibly with alkyl substituents having from 1 to 6 carbon atoms;

c) heterocyclic radicals with a ring of 5 or 6 atoms;

d) arylene or alkylarylene radicals with one or more benzene rings, possibly linked to each other by O, S atoms or by: —CO—, —SO—, —NH—, $—SO_2—$, alkenyl groups having from 1 to 3 carbon atoms and wherein R is selected from hydrogen or an alkyl or phenyl group,

said fluorinated polyamides showing an inherent viscosity, determined at 20°C on a 0.3 wt% polyamide solution in a solvent mixture of dimethylformamide and 1,1,2-trichloro-trifluoro-ethane comprised between 0.1 and 0.6

$$\left[\frac{dl}{g}\right]$$

2. Vulcanizable compositions according to claim 1, characterized in that they further contain from 2 to 7 parts by weight per 100 parts b.w. of fluoroelastomer, of a mixture of 15—40% b. w. of polytetrafluoroethylene and of 85—60% by weight of perfluoropolyether having either structure:

$$X-O-(CF_2-\underset{\displaystyle CF_3}{\underset{|}{CF}}-O)_n-(CF_2O)_m-Y \quad \text{or}$$

$$X-O-(CF_2CF_2O)_p-(CF_2O)_q-Y$$

wherein $X$ and $Y$ are perfluoroalkyl radicals; $n$ is an integer comprised between 30 and 100
$m$ is an integer comprised between 1 and 5
$p$ is an integer comprised between 60 and 1600
$q$ is an integer comprised between 100 and 2700,
having a viscosity comprised between $10^{-3}$ and $10^{-2}$ $m^2/s$ (1000—10000 cSt) in the first case, and $5.10^{-4}$ and $3.10^{-2}$ $m^2/s$ (500—30000) cSt in the second instance.

3. Vulcanizable composition according to claim 1, characterized in that it comprises vulcanizing agents of the type of biphenols and accelerating agents.

4. Manufactured articles based on vulcanized fluorinated elastomers obtained starting from the compositions claimed in claims 1 or 2 herein above.

**Patentansprüche**

1. Vulkanisierbare Zusammensetzung auf der Basis von Elastomer-Mischpolymeren aus Vinylidenfluorid fluorierten oder chlorfluorierten Olefinen oder mit fluorierten Vinyläthern (nachfolgend: Fluorelastomere genannt), welches als Verfahrens-Hilfsmittel für die Verarbeitung der Mischung von 5 bis 15 Gew.-Teile (pro 100 Gew.-Teile an fluorelastomeren) eines fluorierten Polyamids umfaßt, das eine Struktur aufweist, die durch wiederkehrende Einheiten gebildet wird und die folgende Formel aufweist:

$$-COCF_2O(CF_2O)_n-(CF_2CF_2O)_m-CF_2CO-NR-A-NR-$$

worin: die $CF_2O$— und die $CF_2CF_2O$-Einheiten statistisch entlang der Kette verteilt sind, und worin $n$ und $m$ ganze Zahlen von 2 bis 100 sind, während die Summe n + m zwischen 5 und 200 beträgt, das Verhältnis von m/n zwischen 0,2 und 1,5 liegt, und worin A als zweiwertige Gruppe ausgewählt wurde von:

a) Alkylenen mit 2 bis 20, jedoch vorzugsweise mit 6 bis 12 Kohlenstoffatomen, gegebenenfalls mit alkylsubstituenten mit 1 bis 6 Kohlenstoffatomen in der hauptkette;

b) Cycloalkylenen mit 5 bis 10 Kohlenstoffatomen, gegebenenfalls mit Alkylsubstituenten mit 1 bis 6 Kohlenstoffatomen;

c) heterozyklische Gruppen mit einem Ring von 5 oder 6 Atomen;

d) Arylen- oder Alkylarylengruppen mit einem oder mehreren Benzolringen, gegebenenfalls miteinander verbunden durch O, S — Atome oder durch: —CO—, —SO—, —NH—, —$SO_2$—, Alkylengruppen mit 1 bis 3 Kohlenstoffatomen, und worin R ausgewählt wurde von: Wasserstoff oder einer Alkyl- oder Phenylgruppe,
wobei die genannten fluorierten Polyamide eine inherente Viskosität zwischen 0, 1 und 0,6

$$\left[\frac{dl}{g}\right]$$

aufweisen, die bei 20°C mit einer 0,3 Gew.% Polyamidlösung in einer Lösungsmittelmischung aus Dimethylformamid und 1,1,2-Trichlortrifluorethan bestimmt worden ist.

2. Vulkanisierbare Zusammensetzung nach Anspruch 1, dadurch gekennzeichnet, daß diese weiterhin von 2 bis 7 Gew.-Teilen pro 100 Gew.-Teile Fluorelastomer einer Mischung aus 15—40 Gew.-% Polytetrafluorethylen und 85—60 Gew.-% Perfluorpolyäther mit der Ätherstruktur

$$X-O-(CF_2-\underset{\displaystyle CF_3}{\underset{|}{CF}}-O)_n-(CF_2O)_m-Y \quad \text{oder}$$

$$X-O-(CF_2CF_2O)_p-(CF_2O)_q-Y$$

enthält,
worin $X$ und $Y$ Perfluoralkylgruppen bedeuten,
$n$ eine ganze Zahl zwischen 30 und 100 ist,
$m$ eine ganze Zahl zwischen 1 und 5 ist,
$p$ eine ganze Zahl zwischen 60 und 1600 ist,
$q$ eine ganze Zahl zwischen 100 und 2700 ist,

und die eine Viskosität zwischen $10^{-3}$ und $10^{-2}$ $m^2/s$ (1000—10 000 cSt) im ersteren Falle und zwischen 5:$10^{-4}$ und 3:$10^2$ $m^2/s$ (500—30 000 cSt) im zweiten Falle aufweist.

3. Vulkanisierbare Zusammensetzung nach Anspruch 1, dadurch gekennzeichnet, daß diese Vulkanisierungsmittel vom Typ des Biphenols und Beschleunigungsmittel umfaßt.

4. Hergestellte Artikel auf der Basis von vulkanisierten fluorinierten Elastomeren, die man erhielt, indem von den Zusammensetzungen nach Anspruch 1 oder 2 ausgegangen wurde.

**Revendications**

1. Composition vulcanisable à base de copolymères élastomères de fluorure de vinylidène avec des oléfines fluorées ou chlorofluorées ou avec des éthers de vinyle fluoré (désignés ci-après élastomères fluorés), comprenant comme agents d'aide à la fabrication pour la fabrication du mélange de 5 à 15 parties en poids pour 100 parties en poids d'élastomère fluoré, d'un polyamide fluoré ayant une structure formée par les motifs récurrents représentés par la formule:

$$—COCF_2O(CF_2O)_n—(CF_2CF_2O)_m—CF_2CO—NR—A—NR—$$

dans laquelle:

les motifs $CF_2O$ et $CF_2CF_2O$ sont distribués statistiquement le long de la chaîne;

et dans laquelle:

*n* et *m* sont des entiers de 2 à 100 tandis que la somme n + m est comprise entre 5 et 200, le rapport m/n se situe entre 0,2 et 1,5 tandis que

A est un radical bivalent choisi parmi:

a) les alkylènes contenant de 2 à 20 atomes de carbone, mais de préférence de 6 à 12, comportant éventuellement des substituants alkyles possédant de 1 à 6 atomes de carbone dans la chaîne principale;

b) des cycloalkylènes contenant de 5 à 10 atomes de carbone, éventuellement comportant des substituants alkyles possédant de 1 à 6 atomes de carbone;

c) des radicaux hétérocycliques comportant un cycle à 5 ou 6 atomes,

d) des radicaux arylènes ou alkylarylènes comportant un ou plusieurs cycles benzéniques éventuellement reliés l'un à l'autre par des atomes de O, S ou par: —CO—, —SO—, —NH—, —$SO_2$—, des groupes alkényles possédant de 1 à 3 atomes de carbone R est choisi parmi l'hydrogène ou un radical alkyle ou un radical phényle;

ces polyamides fluorés présentant une viscosité inhérente détérminée à 20°C sur une solution à 0,3% en poids de polyamide dans un mélange solvant de diméthyl formamide et de 1,1,2-trichlorotrifluoroéthane comprise entre 0,1 et 0,6

$$\left[\frac{dl}{g}\right]$$

2. Composition vulcanisable suivant la revendication 1, caractérisée en ce qu'elle contient un outre de 2 à 7 parties en poids pour 100 parties en poids d'élastoimère fluoré, d'un mélange de 15 à 40% en poids de polytétrafluoroéthylène et de 85 à 60% en poids de perfluoropolyéther ayant soit la structure:

$$X—O—(CF_2—\underset{\displaystyle CF_3}{\underset{|}{CF}}—O)_n—(CF_2O)_m—Y$$

soit:

$$X—O—(CF_2CF_2O)_p—(CF_2O)_q—Y$$

dans lesquelles:

X et Y sont des radicaux perfluoroalkyles;

*n* est un entier compris entre 30 et 100;

*m* est un entier compris entre 1 et 5;

*p* est un entier compris entre 60 et 1.600;

*q* est un entier compris entre 100 et 2.700;

ayant une viscosité comprise entre $10^{-3}$ et $10^{-2}$ $m^2/s$ (1.000 à 10.000 cSt) dans le premier cas, et entre $5.10^{-4}$ et $3.10^{-2}$ $m^2/s$ (500 à 30.000 cSt) dans le second cas.

3. Composition vulcanisable suivant la revendication 1, caractérisée en ce qu'elle comprend des agents de vulcanisation du type des biphénols et des agents d'accélération.

4. Articles manufacturés basés sur des élastomères fluorés vulcanisés obtenus en partant des compositions revendiquées dans les revendications 1 ou 2 ci-dessus.

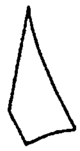

FIGURE 1

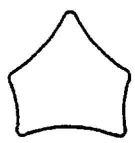

FIGURE 2

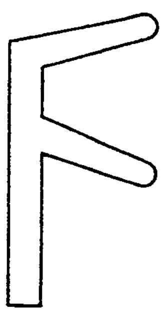

FIGURE 3

SCALE 2÷1